# DEMANDE DE BREVET EUROPEEN

(11) **EP 1 555 086 A1**
(43) Date de publication de la demande: **20.07.2005**
(21) Numéro de dépôt: 04100114.0
(22) Date de dépôt: 15.01.2004
(51) Int. Cl.: B23Q 5/34

(54) **Appareil d'usinage de type à outils d'usinage radiaux**

(71) Demandeur: Affolter Electronique SA, 2735 Malleray-Bévilard (CH)
(72) Inventeur: Affolter, Marc-Alain, 2735, Malleray-Bévilard (CH); Fischer, Jean-Jacques, 2538, Romont (CH); Studer, Olivier, 2516, Lamboing (CH)
(74) Mandataire: BOVARD SA

(57) **Abrégé**

Appareil d'usinage (4) de type à outils d'usinage radiaux (300),
cet appareil d'usinage (4) regroupant une pluralité d'outils d'usinage radiaux (300) qui sont disposés radialement à une pièce (2) vers laquelle ils doivent être déplacés afin d'y réaliser un usinage, et ce, lors de l'entraînement en rotation de ladite pièce (2) selon un axe de rotation (5) confondu avec un axe longitudinal qu'elle présente,
cet appareil d'usinage (4) comprenant une structure (9) sur laquelle sont disposés les outils d'usinage radiaux (300), chaque outil d'usi nage radial (300) étant associé à un porte-outil (10) qui, lui même est :
- par un premier dispositif de guidage (11) en translation, guidé en translation dans un plan sécant à l'axe de rotation (5) de la pièce (2) à usiner, et ce, suivant une direction orientée vers la pièce (2) à usiner et,
- par un deuxième dispositif d'actionnement (12), actionné en translation suivant la direction de guidage, de manière à effectuer un usinage, ledit deuxième dispositif d'actionnement (12) en translation comprenant,
   . au moins une came (13) qui porte au moins une partie d'actionnement (14), telle une surface profilée, cette partie d'actionnement (14) étant profilée pour prédéterminer au moins un déplacement d'un élément lecteur (15) qui coopère avec ladite partie d'actionnement (14),
   . un tel élément lecteur (15), d'une part, associé à un porte-outil (10) et, d'autre part, disposé pour coopérer avec la partie d'actionnement (14) afin de, lors du déplacement de la came (13), actionner le porte-outil (10) auquel il est associé,
   . un mécanisme moteur (16) pour assurer le déplacement commandé de la came (13) au moins entre deux positions opposées déterminées. (figure 3).

## Description

L'invention se rapporte à un appareil d'usinage de type à outils d'usinage radiaux.

L'invention se rapporte également aux machines d'usinage qui sont équipées de cet appareil d'usinage à outils d'usinage radiaux.

Un tel type d'appareil d'usinage équipe classiquement une machine d'usinage par tournage et plus précisément une machine de décolletage.

Plus précisément, un appareil d'usinage du type précité comprend une pluralité d'outils d'usinage qui sont disposés radialement à une pièce vers laquelle ils doivent être déplacés afin d'y réaliser un usinage, et ce, lors de l'entraînement en rotation de ladite pièce selon un axe de rotation confondu avec un axe longitudinal qu'elle comporte.

La pièce consiste, par exemple, en une portion d'une barre de matériau qui sera séparée de cette barre de matériau, après que différents usinages y aient été réalisés.

Sur les machines connues, les outils sont chacun supporté par un porte-outil qui, d'une part, est guidé en translation dans un plan sécant à l'axe de rotation de la pièce, et ce, suivant une direction orientée vers la pièce à usiner et, d'autre part, commandé en translation dans cette direction, de manière à effectuer un usinage pour lequel l'outil est prévu.

Classiquement, chaque porte-outil est associé un dispositif d'actionnement mettant en oeuvre une came et au moins certaines des cames associées à plusieurs dispositifs sont solidaires d'un même arbre de commande entraîné par un organe moteur commun à plusieurs arbres de commande.

Ces appareils d'usinage donnent de bons résultats, mais ils sont chacun conçus pour une production très spécifique et peuvent être difficilement adaptés à une production autre que celle prévue.

Un résultat que l'invention vise à obtenir est un appareil d'usinage à outil d'usinage radiaux qui présente une adaptabilité accrue.

Un autre résultat que l'invention vise à obtenir est un appareil d'usinage à outils d'usinage radiaux qui, bien que comprenant un certain nombre d'axes numériques, c'est-à-dire un certains nombre de dispositifs motorisés pour le déplacement et le guidage des outils selon différentes directions, met en oeuvre un nombre d'organes moteurs qui est réduit par rapport au nombre d'outils que comprend cet appareil.

Ce résultat s'avère particulièrement intéressant au plan économique, lorsque les organes moteurs sont de type à commande numérique.

A cet effet, l'invention a pour objet un appareil d'usinage à outils d'usinage radiaux, cet appareil d'usinage regroupant une pluralité d'outils d'usinage qui sont disposés radialement à une pièce vers laquelle ils doivent être déplacés afin d'y réaliser un usinage, et ce, lors de l'entraînement en rotation de ladite pièce selon un axe de rotation confondu avec un axe longitudinal qu'elle présente,
cet appareil d'usinage comprenant une structure sur laquelle sont disposés les outils d'usinage radiaux, chaque outil d'usinage radial étant associé à un porte-outil qui, lui même est :
- par un premier dispositif de guidage en translation supporté par la structure, guidé en translation dans un plan sécant à l'axe de rotation de la pièce à usiner, et ce, suivant une direction orientée vers la pièce à usiner et,
- par un deuxième dispositif d'actionnement supporté par la structure, actionné en translation suivant la direction de guidage, de manière à effectuer un usinage pour lequel l'outil d'usinage radial est prévu, ledit deuxième dispositif d'actionnement en translation comprenant,
   . au moins une came, c'est-à-dire une pièce mobile qui porte au moins une partie d'actionnement, telle une surface profilée, cette partie d'actionnement étant profilée pour prédéterminer au moins un déplacement d'un élément lecteur qui coopère avec ladite partie d'actionnement,
   . un tel élément lecteur, d'une part, associé à un porte-outil et, d'autre part, disposé pour coopérer avec la partie d'actionnement afin de, lors du déplacement de la came, actionner le porte-outil auquel il est associé,
   . un mécanisme moteur pour assurer le déplacement commandé de la came au moins entre deux positions opposées déterminées.

Cet appareil d'usinage à outils d'usinage radiaux est notamment caractérisé en ce que :
- chaque came est constituée par au moins un arc d'une couronne circulaire :
   . dont le centre est situé sur un axe d'oscillation sensiblement parallèle à l'axe de rotation de la pièce,
   . qui est porté et guidé sur la structure, par un élément de guidage à cet effet, de manière à pouvoir osciller autour de son axe d'oscillation, et ce, au moins entre deux positions angulaires opposées prédéterminées, dites première position et seconde position,
- chaque came comprend son propre mécanisme moteur et, ce mécanisme moteur est de type capable d'assurer le déplacement de la came dans deux sens opposés, dits premiers sens opposés, et ce, à des vitesses réglables, de manière à commander le déplacement de ladite came entre deux positions prédéterminée, dite troisième position et quatrième position, qui sont comprises entre lesdites première position et seconde position.

L'invention se rapporte également aux machines d'usinage qui sont équipées de cet appareil d'usinage à outils d'usinage radiaux.

L'invention sera bien comprise à la lecture de la description ci-après faite à titre d'exemple non limitatif en regard du dessin ci-annexé qui représente schématiquement :
- figure 1, vue latéralement, une machine d'usinage équipée de l'appareil d'usinage selon l'invention,
- figure 2, une vue simplifiée, en coupe longitudinale, d'un appareil d'usinage conçu selon l'invention,
- figure 3, une vue en perspective d'un appareil d'usinage conçu selon l'invention,
- figure 4, une vue de face de l'appareil d'usinage selon l'invention.

En se reportant au dessin, on voit une machine d'usinage 1 d'une pièce 2 par tournage.

La machine d'usinage 1 représentée comporte une pluralité d'outils d'usinage 3, 300.

Par outil d'usinage 3, 300, on désigne plus particulièrement mais non exclusivement des outils de coupe, c'est-à-dire des outils qui permettent de procéder à l'enlèvement de matière par découpe.

Tel que cela apparaît, la machine d'usinage 1 comporte au moins un appareil d'usinage 4 qui regroupe une pluralité d'outils d'usinage 300 disposés radialement à la pièce 2.

Ces outils d'usinage 300 disposés radialement à la pièce 2 sont dits outils d'usinage radiaux 300 et l'appareil d'usinage 4 est dit appareil d'usinage 4 à outils d'usinage radiaux 300.

Précisément, l'appareil d'usinage 4 comprend une pluralité d'outils d'usinage radiaux 300 qui sont disposés radialement à une pièce 2 vers laquelle ils doivent être déplacés afin d'y réaliser un usinage, et ce, lors de l'entraînement en rotation de ladite pièce 2 selon un axe de rotation 5 confondu avec un axe longitudinal qu'elle présente.

La pièce 2 consiste, par exemple, en une portion d'une barre de matériau 6 qui sera détachée de cette barre de matériau 6, après que différents usinages y aient été réalisés.

Quoi qu'il en soit, la machine d'usinage 1 comprend un premier ensemble fonctionnel 7 qui assure des fonctions :
- de guidage en rotation de la pièce 2 autour d'un axe dit de rotation 5 et
- d'entraînement en rotation de la pièce 2 autour dudit axe de rotation 5.

L'appareil d'usinage 4 de l'invention équipe avantageusement, mais non exclusivement une machine d'usinage 1 de barres de matériau 6, telle une machine d'usinage 1 connue sous le nom de machine de décolletage.

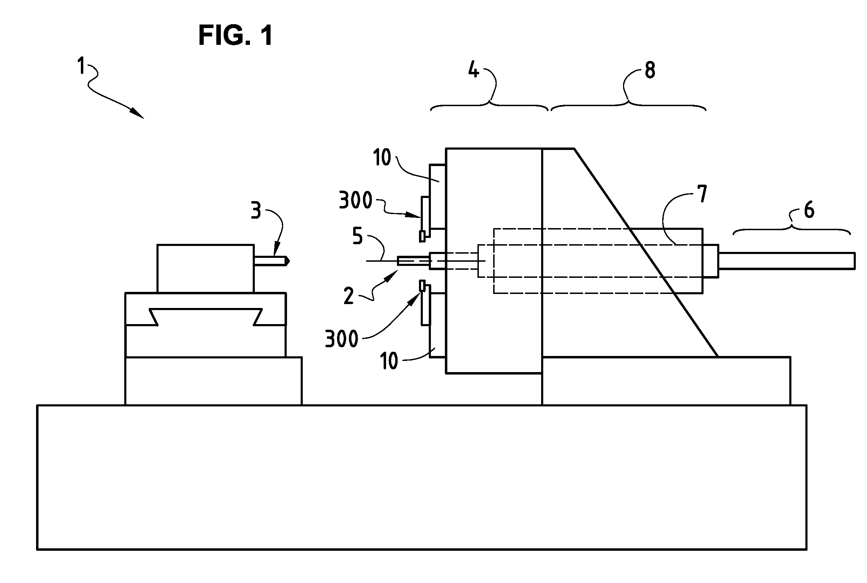

Tel que cela est représenté (figure 1), l'appareil d'usinage 4 est porté par un support 8 qui est, solidaire de la machine d'usinage 1 et dont la position par rapport à l'axe de rotation 5 de la pièce 2 est déterminée.

Par exemple, le support 8 est constitué par un deuxième ensemble fonctionnel situé sur la machine d'usinage 1, tel un ensemble fonctionnel, connu sous le nom de poupée.

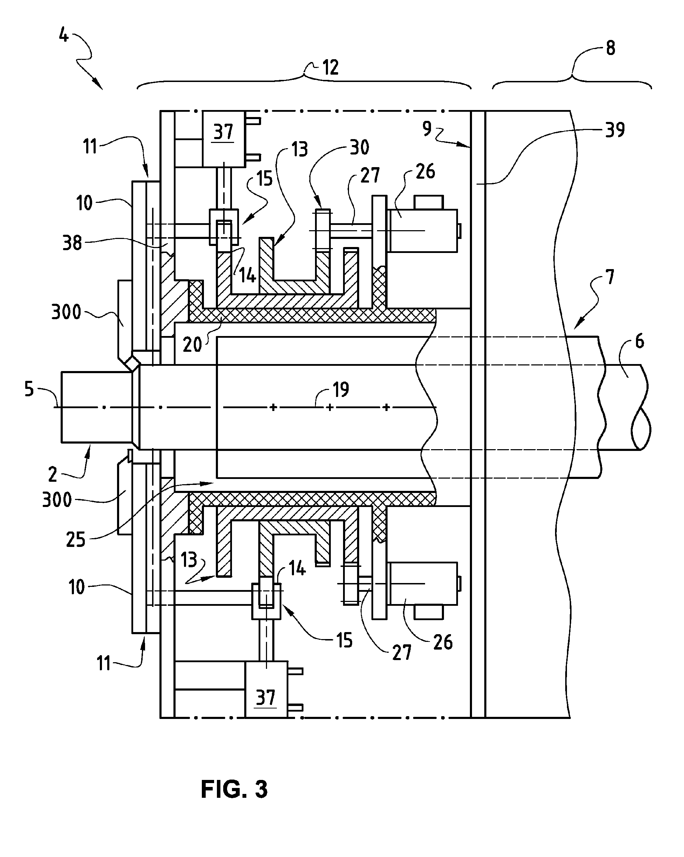

En figure 3, on voit que l'appareil d'usinage 4 perfectionné selon l'invention comprend une structure 9 reliée au support 8 et, sur cette structure 9, sont disposés des outils d'usinage radiaux 300, chaque outil d'usinage radial 300 étant associé à un porte-outil 10 qui, lui même est :
- par un premier dispositif de guidage 11 en translation supporté par la structure 9, guidé en translation dans un plan sécant à l'axe de rotation 5 de la pièce 2 à usiner, et ce, suivant une direction orientée vers la pièce 2 à usiner et,
- par un deuxième dispositif d'actionnement 12 supporté par la structure 9, actionné en translation suivant la direction de guidage, de manière à effectuer un usinage pour lequel l'outil d'usinage radial 300 est prévu.

Par exemple, le premier dispositif de guidage 11 en translation de chaque outil d'usinage radial 300 comprend des glissières.

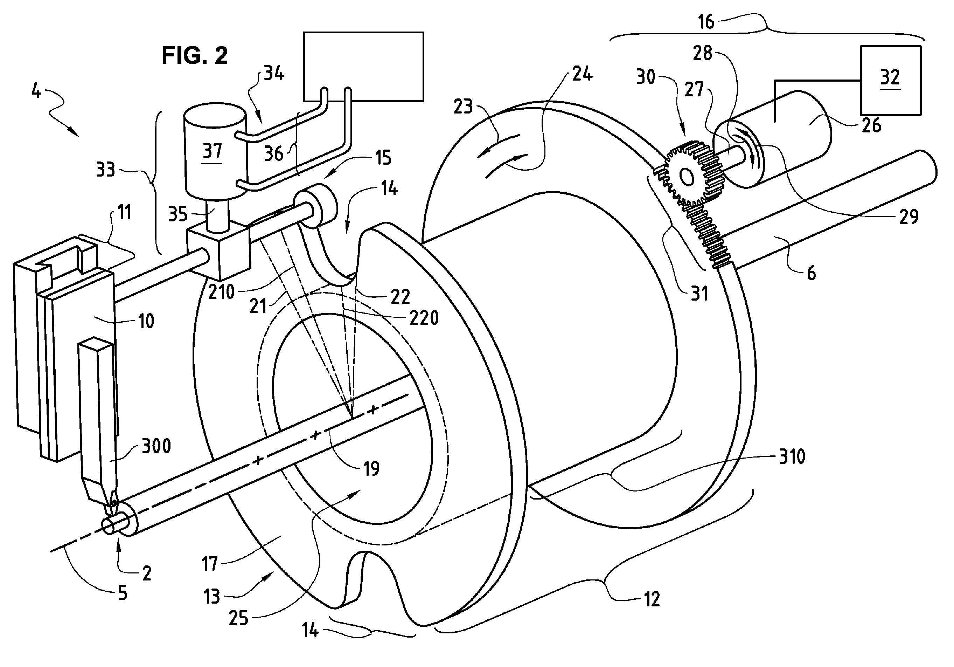

En figure 2, on voit que le deuxième dispositif d'actionnement 12 en translation comprend :
- au moins une came 13, c'est-à-dire une pièce mobile qui porte au moins une partie d'actionnement 14, telle une surface profilée, cette partie d'actionnement 14 étant profilée pour prédéterminer au moins un déplacement d'un élément lecteur 15 qui coopère avec ladite partie d'actionnement 14,
- un tel élément lecteur 15, d'une part, associé à un porte-outil 10 et, d'autre part, disposé pour coopérer avec la partie d'actionnement 14 afin de, lors du déplacement de la came 13, actionner le porte-outil 10 auquel il est associé,
- un mécanisme moteur 16 pour assurer le déplacement commandé de la came 13 au moins entre deux positions opposées déterminées.

L'élément lecteur 15 comprend par exemple un galet et une chape de maintient et guidage de ce galet.

De manière remarquable, dans l'appareil d'usinage 4 perfectionné selon l'invention :
- chaque came 13 est constituée par au moins un arc d'une couronne circulaire 17 :
   . dont le centre est situé sur un axe d'oscillation 19 sensiblement parallèle à l'axe de rotation 5 de la pièce 2,
   . qui est porté et guidé sur la structure 9, par un élément de guidage 20 à cet effet, de manière à pouvoir osciller autour de son axe d'oscillation 19, et ce, au moins entre deux positions angulaires opposées prédéterminées, dites première position 21 et seconde position 22,
- chaque came 13 comprend son propre mécanisme moteur 16 et, ce mécanisme moteur est de type capable d'assurer le déplacement de la came 13 dans deux sens opposés 23, 24, dits premiers sens opposés 23, 24, et ce, à des vitesses réglables, de manière à commander le déplacement de ladite came 13 entre deux positions prédéterminées 210, 220, dites troisième position 210 et quatrième position 220, qui sont comprises entre lesdites première position 21 et seconde position 22.

Le respect de ces premières caractéristiques permet de concevoir un appareil d'usinage 4 comportant des outils d'usinage radiaux 300 pour lesquels, la vitesse d'avance ainsi que la valeur de l'avance peuvent être ajustées, au moins pour un groupe d'outils d'usinage radiaux commandés par une même came 13, par le mécanisme moteur 16 de cette came 13.

En effet, le mécanisme moteur commande l'oscillation de la came 13 à une vitesse angulaire prédéterminée, ce qui induit le déplacement de l'élément lecteur 15 à une vitesse qui est en relation avec ladite vitesse angulaire et à la forme de la partie d'actionnement 14 avec laquelle il coopère.

La partie d'actionnement 14 est par exemple conçue pour engendrer un déplacement de l'organe lecteur à vitesse constante, lorsque la came 13 qui porte cette partie d'actionnement effectue un arc de rotation à vitesse constante.

En figure 3, on voit que de manière encore remarquable l'appareil d'usinage 4 comprend au moins deux cames 13 distinctes qui ont des axes d'oscillation 19 sensiblement confondus et qui s'étendent dans des plans parallèles sécants à la direction de l'axe d'oscillation 19.

De préférence et de manière remarquable chaque came 13 consiste en une première couronne circulaire 17 complète.

De préférence, l'axe d'oscillation 19 de chaque came 13 que comprend l'appareil d'usinage 4 est sensiblement confondu avec l'axe de rotation 5 de la pièce 2.

De manière notable, chaque came 13 porte plusieurs parties d'actionnement 14 qui sont situées dans des secteurs angulaires distincts (figure 2).

Par exemple, les parties d'actionnement 14 sont situées dans des secteurs angulaires de la came 13 qui sont diamétralement opposés lorsqu'on souhaite obtenir des actionnements simultanés de deux outils d'usinage radiaux diamétralement opposés.

Le respect de ces caractéristiques techniques permet de construire un appareil d'usinage 4 comprenant une pluralité de porte-outils 10, actionnés par un nombre réduit de mécanismes moteurs 16.

De manière remarquable, le mécanisme moteur 16 de chaque came 13 comprend :
- associé à la structure 9 de l'appareil d'usinage 4,
   . un organe moteur commandé 26, de type rotatif, cet organe moteur commandé 26 étant équipé d'un arbre de sortie 27 rotatif et étant capable d'entraîner cet arbre de sortie 27 dans deux sens opposés 28, 29, dits seconds sens opposés 28, 29,
   . une roue dentée 30 montée sur l'arbre de sortie 27 de l'organe moteur commandé 26 de manière à être entraîné en rotation par ce dernier,
- associé à la came 13, un secteur denté 31 destiné à coopérer avec la roue dentée 30 actionnée en rotation pour commander l'oscillation de cette came 13 sur son axe d'oscillation 19, lors de l'entraînement en rotation de cette roue dentée 30 par l'organe moteur commandé 26.

Par exemple, le secteur denté 31 associé à la came 13 consiste en un élément distinct de la came 13 et lié à cette dernière par un élément de connexion 310, tel une entretoise (figures 2 et 3).

Dans une forme de réalisation le secteur denté 31 est constitué par une deuxième couronne circulaire complète dont au moins une partie de la périphérie comporte une denture.

En ce qui concerne l'élément de connexion 310, il s'agit avantageusement d'un tronçon tubulaire.

De manière notable, dans l'appareil d'usinage perfectionné selon l'invention, chaque came 13, ainsi que l'élément de guidage 20 de cette came 13 autour de son axe d'oscillation 19, le mécanisme moteur 16 de la dite came 13 et chaque porte-outil 10 dont elle permet l'actionnement sont, autour de l'axe d'oscillation 19, configurés et disposés de manière à préserver un espace axial cylindrique 25 libre d'un diamètre au moins suffisant pour autoriser le libre passage de la barre de matériau 6 à usiner.

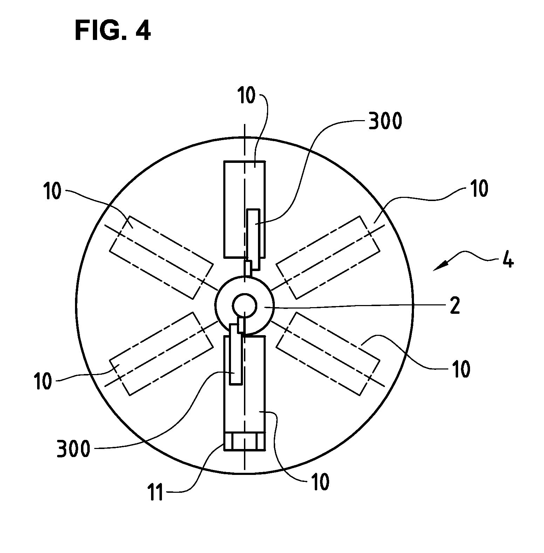

Ces caractéristiques techniques permettent de construire un appareil d'usinage 4 qui peut être monté sur une poupée de tour de décolletage, lorsque la machine d'usinage 1 consiste en un tel tour de décolletage (figures 1 et 4).

Tel que cela a été annoncé, chaque organe moteur commandé 26 consiste avantageusement en un moteur électrique de type à commande numérique.

L'appareil d'usinage 4 selon l'invention comprend dans ce cas des moyens 32 d'alimentation et de commande électrique appropriés.

De manière remarquable, l'appareil d'usinage 4 est équipé d'un mécanisme de poussée 33 de chaque porte-outil et chaque mécanisme de poussée 33 est constitué par :
- un vérin d'actionnement 34 qui, associé à la structure 9 de l'appareil d'usinage 4, comprend une tige motrice 35 reliée,
   . d'une part, à un élément lecteur 15 de came 13, et
   . d'autre part, à un porte-outil 10,
- un circuit 36 assurant la commande du vérin d'actionnement 34 de manière à induire l'application de l'élément lecteur 15, contre la came 13.

Selon une forme de réalisation, chaque mécanisme de poussée 33 d'un porte-outil 10 est constitué par :
- un vérin d'actionnement 34 de type à fluide d'actionnement et qui, associé à la structure 9 de l'appareil d'usinage 4, comprend un cylindre 37 pour recevoir le fluide d'actionnement, un piston (non représenté) situé dans ce cylindre 37, ainsi qu'une tige motrice 35 qui, associée audit piston, sort à l'extérieur du cylindre 37 et est déplacée par le piston sous l'effet du fluide d'actionnement, cette tige motrice 35 étant reliée,
   . d'une part, à un élément lecteur 15 de came 13, et
   . d'autre part, à un porte-outil 10,
- un circuit 36 de commande du vérin d'actionnement 34 consistant en un circuit de mise en pression d'un fluide d'actionnement et de distribution de ce fluide audit vérin d'actionnement 34, de manière à induire l'application de l'élément lecteur 15 de came 13 contre cette came 13.

Avantageusement, le vérin d'actionnement 34 est de type à double effet et le circuit 36 de commande de ce vérin d'actionnement 34 est adapté pour la commande dudit vérin 34 lors de la modification du sens de commande de la came 13 avec laquelle coopère l'élément lecteur 15 associé à ce vérin d'actionnement 34.

La figure 3 représente une possible structure 9 de l'appareil d'usinage 4 selon l'invention.

De manière remarquable, la structure 9 de l'appareil d'usinage 4 comprend avantageusement une pièce principale rigide qui comporte :
- une première partie qui, destiné à constituer l'élément de guidage 20 de la came 13, consiste en une partie tubulaire de révolution, d'axe longitudinal coaxial à l'axe de rotation 5 de la pièce 2 et, c'est sur cette partie tubulaire que chaque came 13 et le secteur denté 31 associé à cette came 13 sont, au moins directement, guidés en rotation autour de l'axe longitudinal, cet axe longitudinal constituant de ce fait l'axe d'oscillation 19,
- une deuxième partie 38 consistant en une partie, qui rigidement associée à l'une des extrémités de la première partie, porte, d'une part, chaque premier dispositif de guidage 11 en translation d'un outil d'usinage radial 300 et, d'autre part, chaque un deuxième dispositif d'actionnement 12 d'un outil d'usinage radial 300
- une troisième partie 39, qui associée à au moins l'une desdites première partie et deuxième partie est destinée à être fixée sur un support 8 qui est, solidaire de la machine d'usinage 1 et dont la position par rapport à l'axe de rotation 5 de la pièce 2 est déterminée.

L'homme du métier est à même de prévoir les différents moyen de guidage sans avoir à faire preuve d'invention.

En consultant les figures 2 et 3, on constate que ledit premier dispositif de guidage 11 en translation n'a pas la même orientation sur les deux figures. Bien qu'elle ne soit pas exclue au plan de la construction, l'orientation donnée en figure 2, a pour but de faciliter la compréhension.

## Revendications

1. Appareil d'usinage (4) de type à outils dits outils d'usinage radiaux (300),
cet appareil d'usinage (4) regroupant une pluralité d'outils d'usinage dits radiaux (300) qui sont disposés radialement à une pièce (2) vers laquelle ils doivent être déplacés afin d'y réaliser un usinage, et ce, lors de l'entraînement en rotation de ladite pièce (2) selon un axe de rotation (5) confondu avec un axe longitudinal qu'elle présente,
cet appareil d'usinage (4) comprenant une structure (9) sur laquelle sont disposés les outils d'usinage radiaux (300), chaque outil d'usinage radial (300) étant associé à un porte-outil (10) qui, lui même est :
- par un premier dispositif de guidage (11) en translation supporté par la structure (9), guidé en translation dans un plan sécant à l'axe de rotation (5) de la pièce (2) à usiner, et ce, suivant une direction orientée vers la pièce (2) à usiner et,
- par un deuxième dispositif d'actionnement (12) supporté par la structure (9), actionné en translation suivant la direction de guidage, de manière à effectuer un usinage pour lequel l'outil d'usinage radial (300) est prévu, ledit deuxième dispositif d'actionnement (12) en translation comprenant,
. au moins une came (13), c'est-à-dire une pièce mobile qui porte au moins une partie d'actionnement (14), telle une surface profilée, cette partie d'actionnement (14) étant profilée pour prédéterminer au moins un déplacement d'un élément lecteur (15) qui coopère avec ladite partie d'actionnement (14),
. un tel élément lecteur (15), d'une part, associé à un porte-outil (10) et, d'autre part, disposé pour coopérer avec la partie d'actionnement (14) afin de, lors du déplacement de la came (13), actionner le porte-outil (10) auquel il est associé,
. un mécanisme moteur (16) pour assurer le déplacement commandé de la came (13) au moins entre deux positions opposées déterminées,
l'appareil d'usinage étant **caractérisé en ce que** :
- chaque came (13) est constituée par au moins un arc d'une couronne circulaire (17) :
. dont le centre est situé sur un axe d'oscillation (19) sensiblement parallèle à l'axe de rotation (5) de la pièce (2),
. qui est porté et guidé sur la structure (9), par un élément de guidage (20) à cet effet, de manière à pouvoir osciller autour de son axe d'oscillation (19), et ce, au moins entre deux positions angulaires opposées prédéterminées, dites première position (21) et seconde position (22),
- chaque came (13) comprend son propre mécanisme moteur (16) et, ce mécanisme moteur est de type capable d'assurer le déplacement de la came (13) dans deux sens opposés (23, 24), dits premiers sens opposés (23, 24), et ce, à des vitesses réglables, de manière à commander le déplacement de ladite came (13) entre deux positions prédéterminées (210, 220), dites troisième position (210) et quatrième position (220), qui sont comprises entre lesdites première position (21) et seconde position (22).

2. Appareil d'usinage selon la revendication 1, **caractérisé en ce que** le mécanisme moteur (16) de chaque came (13) comprend :
- associé à la structure (9) de l'appareil d'usinage (4),
. un organe moteur commandé (26), de type rotatif, cet organe moteur commandé (26) étant équipé d'un arbre de sortie (27) rotatif et étant capable d'entraîner cet arbre de sortie (27) dans deux sens opposés (28, 29), dits seconds sens opposés (28, 29),
. une roue dentée (30) montée sur l'arbre de sortie (27) de l'organe moteur commandé (26) de manière à être entraîné en rotation par ce dernier,
- associé à la came (13), un secteur denté (31) destiné à coopérer avec la roue dentée (30) actionnée en rotation pour commander l'oscillation de cette came (13) sur son axe d'oscillation (19), lors de l'entraînement en rotation de cette roue dentée (30) par l'organe moteur commandé (26).

3. Appareil d'usinage selon la revendication 1, **caractérisé en ce que** chaque came (13), ainsi que l'élément de guidage (20) de cette came (13) autour de son axe d'oscillation (19), le mécanisme moteur (16) de la dite came (13) et chaque porte-outil (10) dont elle permet l'actionnement sont, autour de l'axe d'oscillation (19), configurés et disposés de manière à préserver un espace axial cylindrique (25) libre d'un diamètre au moins suffisant pour autoriser le libre passage de la barre de matériau (6) à usiner.

4. Appareil d'usinage selon l'une des revendications 1 à 3, **caractérisé en ce qu'**il est équipé d'un mécanisme de poussée (33) de chaque porte-outil et chaque mécanisme de poussée (33) est constitué par :
- un vérin d'actionnement (34) qui, associé à la structure (9) de l'appareil d'usinage (4), comprend une tige motrice (35) reliée,
. d'une part, à un élément lecteur (15) de came (13), et
. d'autre part, à un porte-outil (10),
- un circuit (36) assurant la commande du vérin d'actionnement (34) de manière à induire l'application de l'élément lecteur (15), contre la came (13).

5. Appareil d'usinage selon la revendication 4, **caractérisé en ce que** Selon une forme de réalisation, chaque mécanisme de poussée (33) d'un porte-outil (10) est constitué par :
- un vérin d'actionnement (34) de type à fluide d'actionnement et qui, associé à la structure (9) de l'appareil d'usinage (4), comprend un cylindre (37) pour recevoir le fluide d'actionnement, un piston situé dans ce cylindre (37), ainsi qu'une tige motrice (35) qui, associée audit piston, sort à l'extérieur du cylindre (37) et est déplacée par le piston sous l'effet du fluide d'actionnement, cette tige motrice (35) étant reliée,
. d'une part, à un élément lecteur (15) de came (13), et
. d'autre part, à un porte-outil (10),
- un circuit (36) de commande du vérin d'actionnement (34) consistant en un circuit de mise en pression d'un fluide d'actionnement et de distribution de ce fluide audit vérin d'actionnement (34), de manière à induire l'application de l'élément lecteur (15) de came (13) contre cette came (13).

6. Appareil d'usinage selon l'une quelconque des revendication 1 à 5, **caractérisé en ce que** la structure (9) de l'appareil d'usinage (4) comprend avantageusement une pièce principale rigide qui comporte :
- une première partie qui, destiné à constituer l'élément de guidage (20) de la came (13), consiste consistant en une partie tubulaire de révolution, d'axe longitudinal coaxial à l'axe de rotation (5) de la pièce (2) et, c'est sur cette partie tubulaire que chaque came (13) et le secteur denté (31) associé à cette came (13) sont, au moins directement, guidés en rotation autour de l'axe longitudinal, cet axe longitudinal constituant de ce fait l'axe d'oscillation (19),
- une deuxième partie (38) consistant en une partie, qui rigidement associée à l'une des extrémités de la première partie, porte, d'une part, chaque premier dispositif de guidage (11) en translation d'un outil d'usinage radial (300) et, d'autre part, chaque un deuxième dispositif d'actionnement (12) d'un outil d'usinage radial (300),
- une troisième partie (39), qui associée à au moins l'une desdites première partie et deuxième partie est destinée à être fixée sur un support (8) qui est, solidaire de la machine d'usinage (1) et dont la position par rapport à l'axe de rotation (5) de la pièce (2) est déterminée.

7. Appareil d'usinage selon l'une quelconque des revendications 1 à 6, **caractérisé en ce qu'**il comprend au moins deux cames (13) distinctes qui ont des axes d'oscillation (19) sensiblement confondus et qui s'étendent dans des plans parallèles sécants à la direction de l'axe d'oscillation (19).

8. Appareil d'usinage selon l'une quelconque des revendications 1 à 7, **caractérisé en ce que** chaque came (13) consiste en une première couronne circulaire (17) complète.

9. Appareil d'usinage selon l'une quelconque des revendications 1 à 8, **caractérisé en ce que** l'axe d'oscillation (19) d e chaque came (13) que comprend l'appareil d'usinage (4) est sensiblement confondu avec l'axe de rotation (5) de la pièce (2).

10. Appareil d'usinage selon l'une quelconque des revendications 1 à 9, **caractérisé en ce que** chaque came (13) porte plusieurs parties d'actionnement (14) qui sont situées dans des secteurs angulaires distincts.

11. Machine d'usinage **caractérisée en ce qu'**elle comprend un appareil d'usinage selon l'une quelconque des revendications 1 à 10.
